# EUROPEAN PATENT APPLICATION

(11) **EP 0 814 612 A2**
(43) Date of publication of application: **29.12.1997**
(21) Application number: 97109704.3
(22) Date of filing: 13.06.1997
(51) Int. Cl.: H04N 7/26

(54) **Method and apparatus of moving picture transmission**

(30) Priority: 21.06.1996 JP 161905/96; 19.05.1997 JP 128706/97
(71) Applicant: SANYO ELECTRIC Co., Ltd., Moriguchi-shi, Osaka (JP)
(72) Inventor: Kato, Masami, Hashima-gun, Gifu (JP)
(74) Representative: Glawe, Delfs, Moll & Partner

(57) **Abstract**

Video frame information stored in a compression video information storage circuit (20) is read out to a video frame buffer (22). When determination is made that the read out frame is a PB frame by a video frame type determination circuit (24), a B block extraction circuit (26) extracts bidirectional predictive coding information (B block). When determination is made that there is a delay in a transmission circuit (30) by a communication status monitor circuit (32), a transmission control circuit (34) provides control so that the extracted B block is applied to a subtractor (28c), whereby the B block read out from the video frame buffer (22) is canceled to reduce the amount of information to be transmitted to eliminate delay.

## Description

### BACKGROUND OF THE INVENTION

### Field of the Invention

The present invention relates to a moving picture transmission method and a moving picture transmission apparatus. More particularly, the present invention relates to a method and apparatus of moving picture transmission that transmits in real time compression video information that is compression-coded by a compression coding method using interframe predictive coding.

### Description of the Background Art

It is conventionally known to transmit a moving picture via telephone lines (high-speed communication line such as ISDN channel) and exclusive communication lines. These lines are generally characterized in that the capacity of transmission is smaller than the amount of information of the moving picture. It is therefore necessary to compress the amount of the moving picture information at the time of transmission. It is well known that various methods for compressing a moving picture are proposed. Such methods include field reduction of a screen (skipping in screen), decimation of pixels in a screen, predictive coding, frequency conversion, quantization and variable length coding. Predictive coding includes interframe predictive coding (interscreen predictive coding) and motion compensation type interframe predictive coding.

In general, compression video information that is compressed by adapting at least one of the aforementioned technique is transmitted. For example, MPEG information (compression video information) which is the information of a moving picture coded by compression according to the MPEG coding method is transmitted via a channel. In this case, the output bit rate in coding a moving picture according to the MPEG standard must be set in compliance with the transmission rate of the channel.

However, a moving picture is not always compression-coded at the time of transmission at the transmitter end of transmission. Precoded compression video information can be stored in advance to be subsequently transmitted to the receiver end. Furthermore, the channel is not limited to a cable line. There are cases where information is transmitted via a radio line. In the case of transmission via a radio channel, error occurs if the quality of the radio environment is poor. When an error occurs, information is transmitted again by adapting appropriate technique such as an ARQ (Automatic Repeat Request) for a radio channel.

This retransmission causes the transmission amount per unit time to be substantially altered and degraded. There is a possibility that the compression video information transmission is delayed by such degradation in the amount of transmission. Such a delay will induce deviation in the time interval of a moving picture reproduced at the receiver end. Such a delay is also encountered when compression video information is transmitted in a packet via a common line (LAN).

### SUMMARY OF THE INVENTION

A main object of the present invention is to provide a method and apparatus of moving picture transmission that discards a portion of compression video information appropriately when there is delay in compression video information transmission to eliminate the delay.

According to an aspect of the present invention, the delay status during compression video information transmission is monitored in transmitting compression video information including information of a reference screen region and a non-reference screen region that is coded by a compression coding method employing at least interframe predictive coding. In discarding the information of a screen region due to generation of a delay to suppress the delay, information of a reference screen region of the compression video signal is preferentially left, or the information of a non-reference screen region is preferentially discarded.

According to the present invention, delay of compression video information can be eliminated to suppress adverse effect on other screens caused by discarding information.

According to a preferable embodiment of the present invention, information is discarded in units of screens or in units of blocks which are subdivisions of one screen.

According to a more preferable embodiment, the compression coding method employs International Standard Rule H.263 or MPEG standard.

According to another aspect of the present invention, the delay status during compression video information transmission is monitored by a communication status monitor circuit. Also, compression information to be transmitted is stored in a buffer circuit. Information of a reference screen region and a non-reference screen region included in the stored compression video information is detected by a detection circuit. In response to detection of occurrence of a delay by the communication status monitor circuit, a control circuit provides control so that the detected information of a reference screen region is left and the information of a non-reference screen region is discarded.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows the concept of an implementation applied to a video-on-demand-system.

Figs. 2A, 2B and 2C show a structure of an H.263 video frame stored in a video server device of Fig. 1.

Fig. 3 is a block diagram showing a structure of the video server device of Fig. 1.

Fig. 4 shows an implementation adapting MPEG in compression coding.

Fig. 5 shows a structure of a system in which the video server device of Fig. 3 is combined with an audio server device to transmit video frame information and audio information.

Fig. 6 shows the relationship of synchronization of video information and audio information.

### DESCRIPTION OF THE PREFERRED EMBODIMENTS

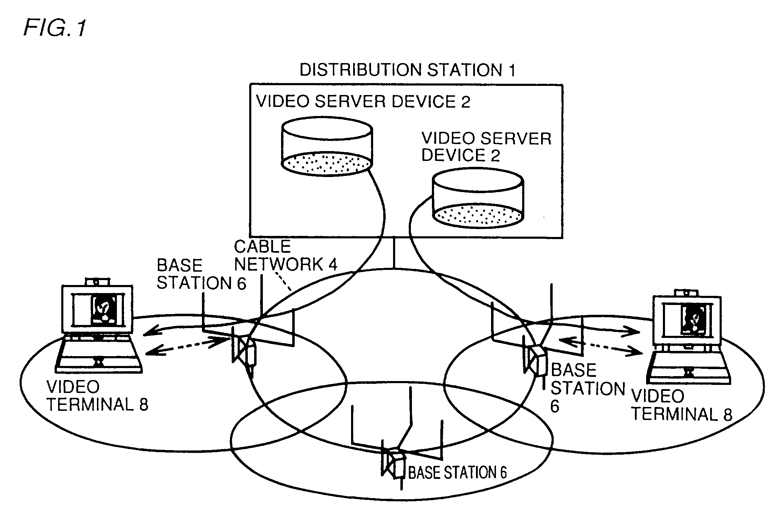

Fig. 1 shows the concept of an implementation in which the present invention is applied to a video-on-demand-system. Referring to Fig. 1, a distribution station 1 provides a moving picture, and includes a video server 2. Video server 2 has compression video information stored therein that is compressed by, for example, International Standard Rule H.263. Compression video information from video server 2 is provided to a radio base station 6 via a cable network 4. Base station 6 employs any of, but not limited to, PCS (Personal Communications Services), DECT (Digital European Cordless Telephone), and CT-2 (Cordless Telephone 2). Base station 6 includes a video terminal 8 that can be connected through a radio communication device not shown. In the case of, for example, a video-on-demand-system, compression video information stored in video server device 2 is transmitted to base station 6 via cable network 4, and then further transmitted to video terminal 8 through PHS radio communication.

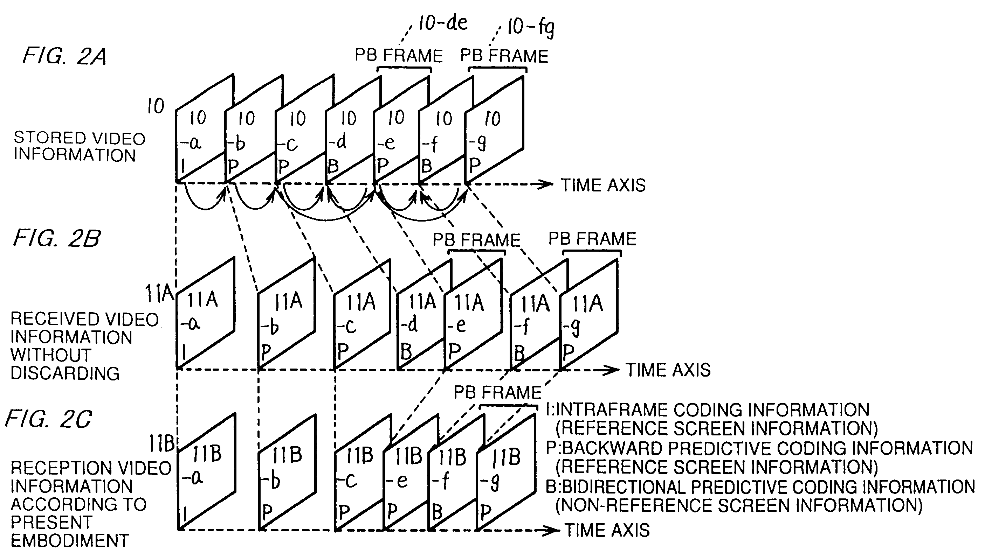

Figs. 2A, 2B and 2C show the structure of the H.263 video frame stored in video server device 2 of Fig. 1. Fig. 2A shows the frame structure of the stored video information 10, ideally prepared at temporary equal interval. Each video frame compressed by interframe predictive coding technique (interscreen predictive coding method) is generally classified into three types according to difference in the video frame that is referred to. The first is an intraframe coding frame (I frame, I picture, intraframe) that can be decoded just by its own video frame. Frame 10-a corresponds to such a frame.

The second is an interframe predictive coding frame (P frame, P picture, backward interframe) that refers to a preceding video frame to code the difference. Frames 10-b, 10-c, 10-e and 10-g correspond to such a frame. More specifically, frame 10-b refers to frame 10-a, frame 10-c refers to frame 10-b, frame 10-e refers to frame 10-c, and frame 10-g refers to frame 10-e.

The third is a bidirectional predictive coding frame (B frame, B picture, bidirectional interframe) that refers to both a preceding video frame and a succeeding video frame to code the difference therebetween. Frames 10-d and 10-f correspond to such a frame. More specifically, frame 10-d refers to frames 10-c and 10-e. Frame 10-f refers to frames 10-e and 10-g.

In the H.263 compression coding method accommodating a low bit rate, P and B frames are coded as one video frame (PB frame). More specifically, information associated with a B frame is embedded in a P frame as a B block. For example, frames 10-d and 10-e, and frames 10-f and 10-g are coded as PB frames 10-de and 10-fg, respectively.

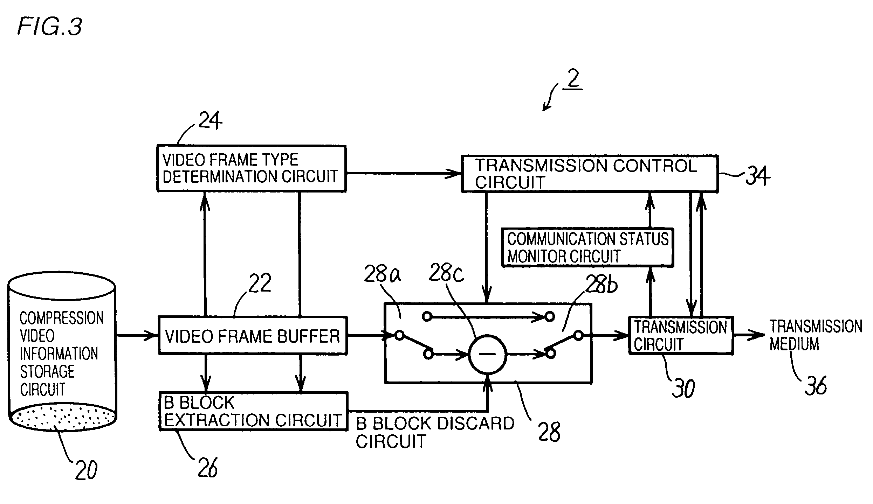

Fig. 3 is a block diagram showing the structure of the video server device of Fig. 1. Referring to Fig. 3, a compression video information storage circuit 20 stores compressed video information. Compression video information read out from compression video information storage circuit 20 is provided to a video frame buffer 22. A video frame type determination circuit 24 is provided to determine whether the video frame read out to video frame buffer 22 is a PB frame or not. A B block extraction circuit 26 functions to extract bidirectional predictive coding information (B block) from video frame buffer 22. When video frame type determination circuit 24 determines that the video frame read out to video frame buffer 22 is a PB frame, B block extraction circuit 26 extracts the B block from the video frame information.

A B block discard circuit 28 discards the B block extracted by B block extraction circuit 26 from the video frame information read out to video frame buffer 22. B block discard circuit 28 includes switches 28a and 28b to select the discard of a B block. B block discard circuit 28 cancels and discards the B block information by having the information of the B block subtracted from the video frame information by a subtraction circuit 28c. B block discard circuit 28 has its output connected to a transmission circuit 30. Transmission circuit 30 carries out retransmission control by ARQ to transmit a video frame to a transmission medium 36. A communication status monitor circuit 32 monitors the transmission status of transmission circuit 30 to determine whether the video frame is delayed or not. The status thereof is transmitted to a transmission control circuit 34.

An operation of video server device 2 according to an embodiment of the present invention will be described hereinafter. Video frame type determination circuit 24 determines whether the video frame read out from compression video information storage circuit 20 of video server device 2 to video frame buffer 22 is a PB frame or not. If the read out video frame is not a PB frame, video frame type determination circuit 24 provides this information to transmission control circuit 34. Transmission control circuit 34 controls switches 28a and 28b such that the intact video frame information of video frame buffer 22 is sent to transmission circuit 30 to be output to transmission medium 36.

When the read out video frame is a PB frame, video frame type determination circuit 24 provides this information to transmission control circuit 34 and B block extraction circuit 26. B block extraction circuit 26 extracts bidirectional predictive coding information (B block) from the video frame information read out to video frame buffer 22, and notifies B block discard circuit 28.

When determination is made that the communication status is proper by communication status monitor circuit 26, transmission control circuit 34 controls switches 28a and 28b so that the intact video frame information of video frame buffer 22 is transmitted to transmission circuit 30 to be output to transmission medium 36.

When determination is made that the communication status is not good, transmission control circuit 34 controls switches 28a and 28b so that video frame information is generated by subtractor circuit 28c having the bidirectional predictive coding information (B block) discarded from video frame information in video frame buffer 22. The generated video frame information is provided to transmission circuit 30 to be output to transmission medium 36.

Description of the operation of video server device 2 will be continued hereinafter with reference to Fig. 2B and 2C. First, the case where a frame is discarded will be described. Fig. 2B shows the structure of a reception video frame included in the video information received by video terminal 8 when a screen is not discarded. More specifically, when retransmission control is effected to cause delay due to an error, a reception video frame group 11A has the display interval of each video frame (intramedia synchronization) increased to result in slow-motioned information.

In contrast, the present embodiment has the B block discarded. Therefore, video terminal 8 receives and displays a reception video frame as shown in Fig. 2C. More specifically, the information associated with the B block applying bidirectional predictive coding is discarded from the PB frame (10-de) in video server device 2. By discarding the B block, the information amount to be transmitted is reduced to correct the increase of the video frame display interval (intramedia synchronization) by retransmission control. It is to be noted that the discarded information (B block) is information of a frame that is not referred to by another video frame (non-reference screen). There is an advantage that disturbance in the image caused by discarding does not occur although the number of video frames displayed on video terminal 8 at the receiver end is reduced.

In the above-described embodiment, the B block of the PB frame is discarded. More specifically, discarding is carried out on a screen-by-screen basis. This may be carried out in a further reduced smaller unit. Also, although only the B block is discarded in the present embodiment, the P frame and the PB frame may both be discarded leaving the I frame when the delay is so great that a great amount of information must be discarded. In any case, the frame (or macroblock) that has a lower level of being referred to is to be discarded preferentially.

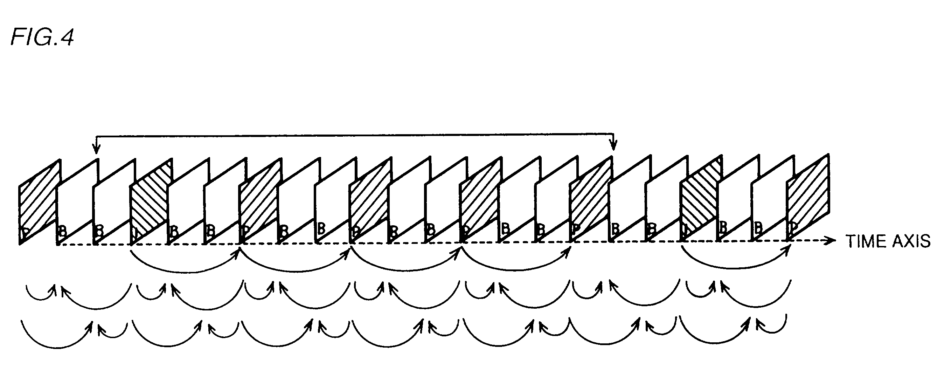

Fig. 4 shows an implementation employing the MPEG with another example of compression coding. As shown in Fig. 4, a P picture (predictive-picture) is inserted for every three cycles from an I picture (intra-picture). Two B pictures (bidirectional predictive-pictures) are inserted between the P pictures. However, the picture structure shown in Fig. 4 is only a way of example, and is not limited. In the video frame information that is coded by compression using the MPEG system, a P or B picture preceding an I picture may be skipped.

A P picture of the MPEG includes intra-coding in units of small blocks of a frame. A B picture also includes intra-coding in the portion of the small block unit in the frame. Therefore, the information in this block can be skipped.

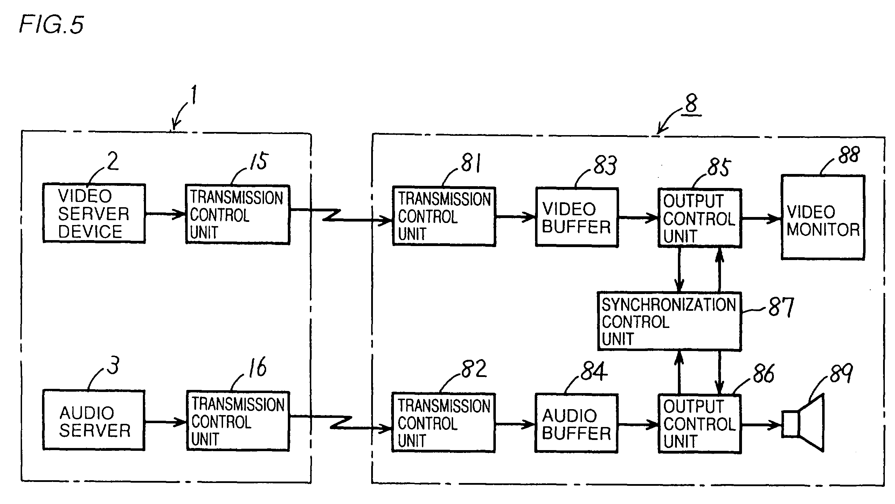

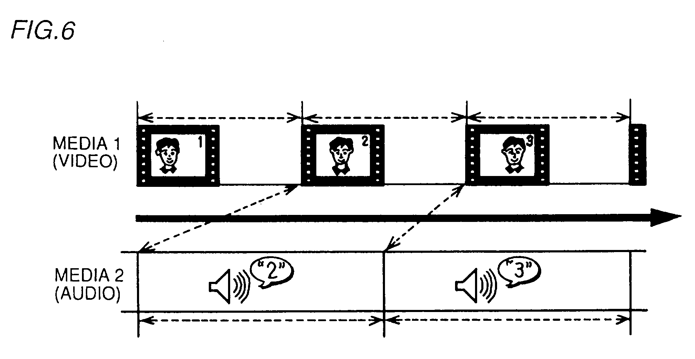

Fig. 5 shows the structure of a system in which the video server device of Fig. 3 is combined with an audio server device to transmit video frame information and audio information. Fig. 6 is a diagram for describing the method of establishing synchronization between video frame information and audio information.

Referring to Fig. 5, distribution station 1 includes an audio server device 3 in addition to video server device 2 shown in Fig. 3. Audio information corresponding to the video frame information output from video server device 2 is stored in audio server device 3. The video frame information output from video server device 2 is transmitted to video terminal 8 through cable network 4, base station 6, and a PHS radio communication device of Fig. 1 by transmission controller unit 15. The audio information from audio server device 3 is also transmitted to video terminal 8 through a transmission medium similar to that of the video system by a transmission control unit 16.

Video terminal 8 includes a transmission control unit 81 receiving video information and a transmission control unit 82 receiving audio information. The video frame information received by transmission control unit 81 is stored in a video buffer 83. The information stored in video buffer 83 is read out by an output control unit 85 to provide a display of the video information on a video monitor 88.

The audio information is received by a transmission control unit 82 and stored in an audio buffer 84. At this time, a synchronization control unit 87 provides control as shown in Fig. 6 to establish synchronization between video information and audio information. Output control unit 86 reads out audio information from audio buffer 84 in synchronization with the video frame according to the output of synchronization control unit 87 to reproduce audio information from a speaker 89.

According to the present embodiment, disturbance in intramedia synchronization at a reception end due to retransmission control can be suppressed without image disturbance occurrence even when stored compression video information is transmitted by a personal handy type telephone system and the like.

When delay is to be suppressed by discarding information of a screen region due to delay in compression video information transmission, information of a reference screen region of the compression video information is left preferentially, or the information of a non-reference screen region is discarded preferentially to eliminate the delay in the present invention. Since the information of a reference screen region is preferentially left when discarding, the undesirable effect on another screen due to discarding can be suppressed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A moving picture transmission method for transmitting compression video information including information of a reference screen region and a non-reference screen region that are coded by a compression coding method employing at least interframe predictive coding, said moving picture transmission method comprising the steps of:
monitoring delay status during transmission of said compression video information, and
leaving information of said reference screen region of said compression video information preferentially when information of a screen region is discarded in response to delay occurrence in said compression video information transmission to suppress the delay.

2. A moving picture transmission method for transmitting compression video information including information of a reference screen region and a non-reference screen region coded by a compression coding method employing at least interframe predictive coding, said moving picture transmission method comprising the steps of:
monitoring delay status during transmission of said compression video information, and
discarding information of said non-reference screen region of said compression video information preferentially when information of a screen region is discarded in response to occurrence of delay in said compression video information transmission to suppress the delay.

3. The moving picture transmission method according to claim 1 or 2, wherein said screen region is one screen.

4. The moving picture transmission method according to claim 1 or 2, wherein said screen region is in units of blocks which are subdivisions of one screen.

5. The moving picture transmission method according to claim 1 or 2, wherein said compression coding is carried out under International Standard Rule H.263.

6. The moving picture transmission method according to claim 1 or 2, wherein said compression coding is carried out under MPEG standard.

7. A moving picture transmission apparatus for transmitting compression video information including information of a reference screen region and a non-reference screen region that is coded by compression coding method employing at least interframe predictive coding, said moving screen transmission apparatus comprising:
communication status monitor means (32) for monitoring delay status during transmission of said compression video information,
buffer means (20) for storing said compression information to be transmitted,
detection means (24) for detecting information of a reference screen region and a non-reference screen region included in compression video information stored in said buffer means, and
non-reference screen region discard means (28) responsive to detection of delay occurrence by said communication status monitor means for providing control so as to leave information of a reference screen region detected by said detection means, and discarding information of a non-reference screen region.

8. The moving picture transmission apparatus according to claim 7, wherein said compression coding is carried out under International Standard Rule H.263.

9. The moving picture transmission apparatus according to claim 7, wherein said compression coding is carried out under MPEG standard.
